Europäisches Patentamt

(19) European Patent Office    (11) Publication number:    **0 165 305**
Office européen des brevets    **B1**

(12) **EUROPEAN PATENT SPECIFICATION**

(45) Date of publication of patent specification: **14.11.90**    (51) Int. Cl.⁵: **C 02 F 11/10**

(21) Application number: **85900399.8**

(22) Date of filing: **10.12.84**

(86) International application number:
**PCT/US84/02025**

(87) International publication number:
**WO 85/02606 20.06.85 Gazette 85/14**

(54) **CHEMICAL REFORMER.**

(30) Priority: **12.12.83 US 560520**
**20.06.84 US 622708**
**16.10.84 US 661342**

(43) Date of publication of application:
**27.12.85 Bulletin 85/52**

(45) Publication of the grant of the patent:
**14.11.90 Bulletin 90/46**

(84) Designated Contracting States:
**AT BE CH DE FR GB LI LU NL SE**

(56) References cited:
**GB-A- 277 419**
**GB-A- 602 376**
**US-A-3 595 742**
**US-A-3 875 357**
**US-A-4 013 516**
**US-A-4 097 378**
**US-A-4 289 625**
**US-A-4 321 151**
**US-A-4 324 639**

(73) Proprietor: **BAKER, David L.**
**100 South Home Avenue**
**Oak Park, IL 60302 (US)**

(72) Inventor: **BAKER, David L.**
**100 South Home Avenue**
**Oak Park, IL 60302 (US)**

(74) Representative: **MacGregor, Gordon et al**
**ERIC POTTER & CLARKSON St. Mary's Court St.**
**Mary's Gate**
**Nottingham, NG1 1LE (GB)**

Courier Press, Leamington Spa, England.

# Description

## Background of the Present Invention

In the United States alone there are approximately 50,000 tons (50,800 tonnes) of semi-dry sewage sludge produced daily in the United States and the treatment, disposal and use of this material presents a major problem to this country on national, state and local levels.

For the most part, sewage sludge has been disposed of after treatment, as opposed to any reformation process producing commercially viable by-products. This disposal includes incineration, landfill, lagooning, stockpiling, ocean-disposition and land-spread. Disposal, however, while commonly practiced, is quite expensive and environmentally dangerous in many applications.

Incineration is generally found uneconomical because of the high cost of incineration and ash disposal equipment and the relatively low net heat yield. Incineration to be productive requires predrying the sludge but the equipment costs are exhorbitantly high and the gaseous discharges are unacceptable for most community environments.

There have been a wide variety of purely experimental systems developed for the pyrolysis of sewage sludge, but they have been without exception economically unjustifiable as a method of disposing of the sewage by-products.

One such project involved the experimental conversion of sewage sludge to oil by hydroliquefaction at the Worcester Polytechnic Institute in 1983. These experiments, however, are not acknowledged by applicant to be prior art since applicant's system and process were reduced to practice prior to this work conducted by Wilmer L. Kranich at Worcester Polytechnic Institute, and his experiments are being noted in this background solely for the purpose of acknowledging contemporaneous activity in hydrogenation of sewage sludge and the problems noted in this contemporaneous activity.

In 1983 Mr. Kranich performed hydroliquefaction experiments with sewage sludge using two methods (1) an in situ (batch) hydrogenation on as-received aqueous suspensions of sewage sludge, and (2) the hydrogenation of dried samples in an oil carrier in situ (also a batch experiment). The only special preparation of the as-received raw materials was to stir the raw contents of a sample to obtain an as representative sample as possible. The dried samples were prepared in two ways; the first involved direct low temperature (below 100 degrees C.) drying in a nitrogen atmosphere to avoid oxygenation by air. In the second method the sludge was first de-watered in the laboratory centrifuge and the supernatant discarded before drying. The difference in the results caused by the presence of the dried dissolved salts was not measurable within the limits of accuracy of the experiment. The dried material was ground to a fine powder and slurried in carrier oil in the second method.

In the oil carrier runs, a slurry of dried powdered sludge was dispersed in an anthracine or paraffin oil in a small beaker, warmed to a freeflowing mixture, and with an added catalyst was placed in an autoclave. Hydrogen from an external source under pressure was added to the autoclave until the initial reaction pressure was reached.

This dried sewage sludge was pyrolized at temperatures between 410 to 440 degrees C. with reaction times of 10 to 20 minutes in oil slurries.

The oil and gas content of the yields from Mr. Kranich's hydrogenation process was inconsistent and inclusive, because the amount of carrier oil lost in his calculations by conversion to gas resulted in a calculated yield greater than the total amount of dry sludge converted, acknowledged by Mr. Kranich to be "an impossible result".

As an alternative to immersing the sewage sludge in an oil carrier, Mr. Kranich also attempted batch pyrolysis with sewage sludge using a water sewage sludge slurry without the addition of any carrier oil. He hypothesized that the pyrolysis of this slurry would produce hydrogen that ideally may produce hexane $C_6H_{14}$ but his experiments were a total failure in that no such results occurred. Again the entire hypothesis of Mr. Kranich's experiment was the addition of externally stored hydrogen.

Mr. Kranich concluded, based upon his experiments, that the conversion of dried sludge slurried in oil was not economically feasible in view of the large equipment and operating costs for pre-drying the sludge and therefore his subsequent experiments were directed to batch testing a water slurried sewage sludge without any oil carrier whatsoever. The results of these latter experiments did not indicate any significant hydrogenation because of the low temperature limitation, i.e. around 300 degrees C., imposed by the large amounts of carrier water.

It is a primary object of the present invention to ameliorate the problems noted in the conversion of sewage sludge to oil. Also, the invention may be used to process a large variety of other organic materials to generate oils and burnable gases.

US-A-4013516 discloses the process for pyrolysis of solid organic materials, which comprises: mixing an oil based-carrier with organic material in a mixing zone in a sufficient amount to permit the mixture to be a more readily flowable material than the corresponding waste material free of oil-based carrier, and subsequently pyrolyzing said organic material at elevated temperature in a pyrolyzing zone including passing said flowable material in a substantially continuous stream through the pyrolyzing zone.

The present invention provides the flowable material contains at least 10% water and is passed under pressure through the pyrolyzing zone to produce liquid oils in the resulting heated stream, and by passing said heated stream downstream of the pyrolyzing zone under pressure through heat exchange means to recover heat and to transfer the recovered heat to the substantially continuous pressurised stream upstream of the pyrolyzing zone, the heat exchange means comprising a convoluted heat exchange wall, the upstream and downstream portions of the continuous stream being in heat exchange relation through the heat exchange wall. Pyrrolysis is carried out in the presence of at least 10 weight percent of water and typically 30, 40 or more weight percent of water.

The pyrolyzing temperature is typically 700 to 950°F (371 to 510°C), preferably 750 to 900°F (399 to 482°C). An example is 840 to 880°F (449 to 471°C). The pressure is typically 700 to 2500 psi (49 to 176 kg/cm²) and preferably 800 to 1500 psi (56 to 105 kg/cm²). Water content of the solid materials may be 40 to 60% by weight or more.

The oil-based carrier may be a hydrocarbon oil. The flowable material preferably contains from 60 to 90 weight percent of the carrier. The material may be pyrolyzed, in a continuous process, for an average time exceeding 5 minutes.

The operation achieves a great efficiency, despite the fact that high temperatures may be used. The heat of the system is recycled, and thus relatively little heat is wasted.

As the result of this, organic waste products that have long caused environmental difficulties can be turned into useful oils and gases that may be burned for energy, or which may serve as lubricants, ingredients in other products, or chemical intermediates. For example, organic garbage, raw sewage, waste paper, scrap wood, or coal may be processed. Surprisingly, much of the oils produced turn out to be hydrocarbons free of oxygen groups, and comparable to petroleum products. Also, the end product can be mostly oils, with little gas generation.

Brief Description of the Drawings

Figure 1 is a schematic flow diagram of a present organic material reforming system.

Figure 2 is a perspective view of a mechanical exchanger illustrated schematically in Figure 1.

Figure 3 is a fragmentary cross section of one of the pressure control devices for maintaining system pressure, illustrated schematically in Figure 1.

Figure 4 is a partly fragmented view of a reactor illustrated schematically in Figure 1 with its heater shown in cross section along with its three heat exchange sections.

Figure 5 is a cross section of one of the reactor heat exchange sections illustrated in Figure 4 taken generally along line 5—5 therein.

Figure 6 is a longitudinal section of a temperature separator illustrated schematically in Figure 1.

Figure 7 is a cross section of the temperature separator taken generally along line 7—7 of Figure 6.

Figure 8 is a schematic flow diagram of a modified form of the present invention including an improved separator system for separating the reformed mixture's constituent components.

Detailed Description of the Preferred Embodiments

Sewage sludge varies significantly from community to community across the country but digested sludge usually contains the following components: oils, 2 to 5%; asphaltenes, 2 to 4%; organic toluene-insolubles, 25 to 40%; ash, 7 to 15%; and water 40 to 50%. An important aspect of the present invention is that the sewage sludge does not have to be dried from the above values prior to chemical reformation by pyrolysis.

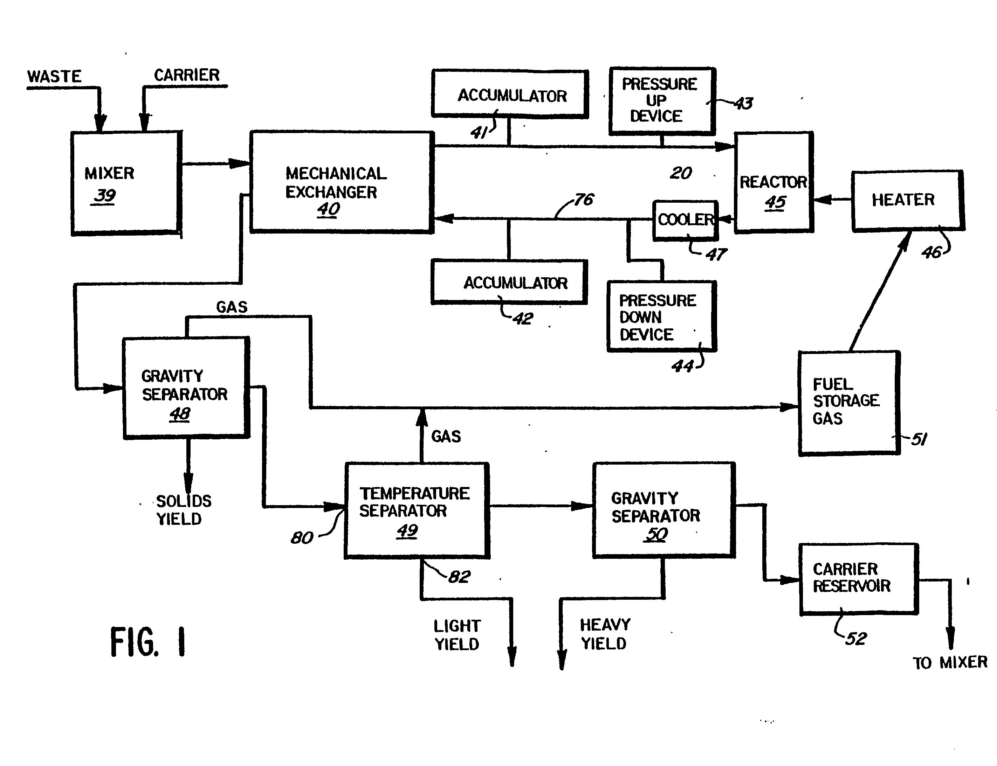

Viewing Figure 1, where the present system is shown schematically, mixer 39 mixes undried sewage sludge with an oil carrier as necessary, which may be essentially recirculated yield produced by the system. Of course, a system start-up carrier oil may be provided for initial start-up. Mechanical exchanger 40 both adds and withdraws equal volumes of the sewage sludge-carrier oil to and from reactor 45, taking fresh material from mixer 39 and conveying such material to reactor 45 in continuous but pulsating fashion. The accumulator 41 reduces the transient pressures produced by the pulsating action of the exchanger 40. Pressure up device 43 is a piston and cylinder device that regulates input pressure to reactor 45 at a desired level, typically less than 2000 psi. (141 kg/cm²).

In the reactor 45, the sewage sludge-carrier oil mixture is typically heated to approximately 840 to 880 degrees F. (449 to 471°C) to produce the pyrolytic conversion of the organic constituents in the sewage sludge to oil and gas, apparently by hydrogenation in addition to the further reformation by hydrogenation of the carrier oil. In the reactor 45 the water changes to superheated steam, apparently providing an improved water/gas reaction with partial shift that provides hydrogen for the hydrogenation process.

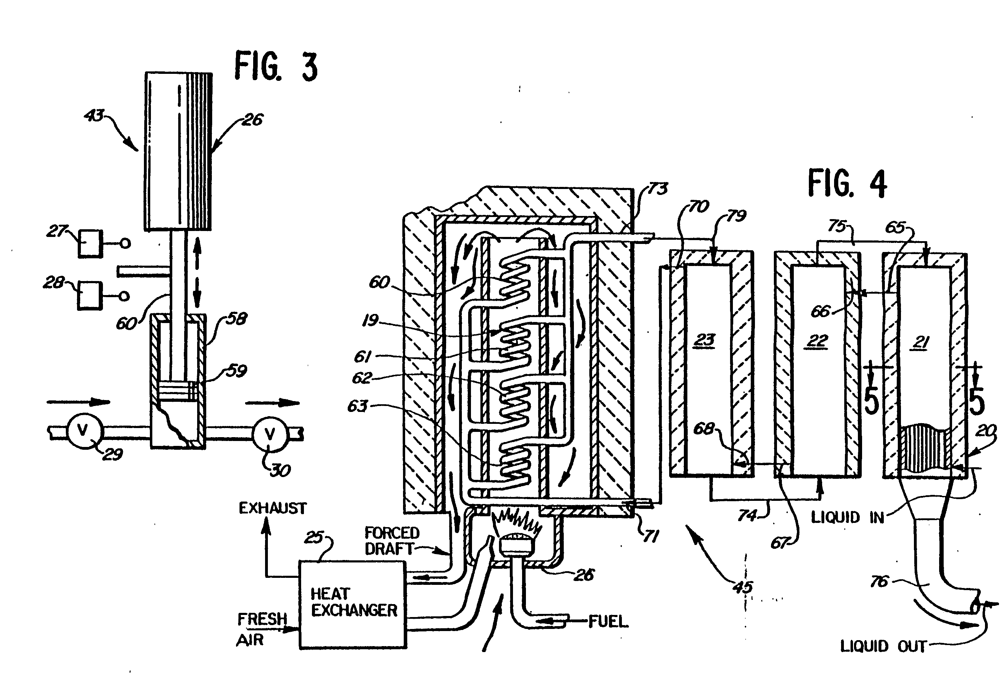

Reactor 45 delivers its output to counterflow heat exchangers 21-23 (Figure 4) that provide an output having a temperature only slightly above ambient. Cooler 47 acts as a safety device to reduce reactor outlet temperatures to avoid the excessive production of gases, and may be of conventional design, such as a chamber of cooling liquid through which flow channel or outlet pipe 76 passes. Pressure-down device 44 is a pressure regulator identical to pressure regulator 43 to regulate the outlet pressure from reactor 45. Accumulator 42 smooths the pulsating flow.

Mechanical exchanger 40 also receives reformed carrier oil-sewage sludge mixture from the reactor and transfers it to gravity separator 48, that separates remaining produced gases and solid yields consisting mostly of tar. The gravity separator is a spiral separator of conventional design, not shown in detail in the drawings, wherein liquid enters the outside and flows in a circular route to the center. During this period free gases collect at the top and are drawn off continuously. Solids settle at the bottom and are removed periodically. Fluid from the center flows continuously out to temperature separator 49. Temperature separator 49 essentially produces the separation of lighter oils from the reformed mixture, and further separates any remaining gaseous components as yield which combines with the also volatile gaseous components from gravity separator 48, for delivery to a fuel storage reservoir 51, which may provide a fuel source for heater 46 or for other fuel purposes.

Gravity separator 50 of conventional design receives the heavier mixture components from temperature separator 49 and includes a spiral separator wherein flow enters from the outside and circles to the middle. The heavier oil and residue is drawn off the bottom, while the lighter yield from the top center is taken off as carrier to a carrier reservoir 52 from where it is recirculated to the mixer 39 as carrier oil liquid.

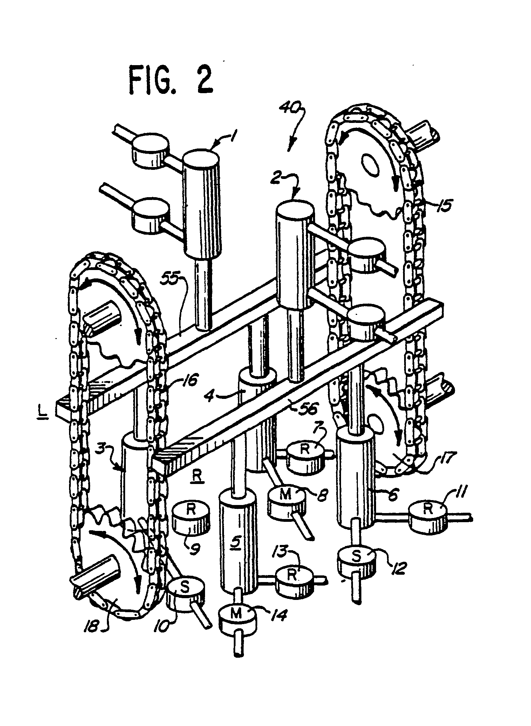

The mechanical exchanger 40 illustrated in Figure 2 is seen to include four piston and cylinder devices 3, 4, 5 and 6 having stationary cylinders and movable headless pistons or plungers driven in reciprocation by hydraulic cylinders 1 and 2 connected to the piston and cylinder devices 3, 4, 5 and 6 by bars 55 and 56. The bars 55 and 56 are connected at their ends to synchronizing chains 15 and 16 which assure 180 degree out-of-phase movement of cylinders 3 and 4 with respect to cylinders 5 and 6.

Cylinders 4 and 5 are connected to draw oil carrier-sewage sludge mixture from mixer 39 and deliver it to reactor 45, while cylinders 3 and 6 are connected to withdraw reformed mixture from reactor 45 and deliver it to gravity separator 48. Valves 7 and 9 are connected to the reactor inlet line and valves 11 and 13 are connected to the reactor outlet line. Valves 8 and 14 are connected to mixer 39 while valves 10 and 12 are connected to gravity separator 48.

When cylinder 1 extends and cylinder 2 retracts, bar 55 goes down and bar 56 goes up, and the following sequence results: Mixture in cylinder 4 is conveyed to the reactor through valve 7; mixture from the reactor is drawn into cylinder 6; mixture from the mixer 39 is drawn into cylinder 5; and reformed mixture in cylinder 3 is delivered to the gravity separator 48. On the reverse stroke with piston 2 extending and piston 1 retracting the following sequence occurs with cylinders 3 and 4 retracting and cylinders 5 and 6 extending: Mixture from mixer 39 is drawn into cylinder 4; reformed mixture in cylinder 6 is conveyed through valve 12 to gravity separator 48; mixture in cylinder 5 is conveyed to the reactor through valve 13; and reformed mixture is drawn into cylinder 3 from the reactor through valve 9.

The mechanical exchanger 40 allows an exchange of liquid mixture with reactor 45 without a volume change in the reactor 45. Because of this a minimum of horsepower is required to pass a given amount of liquid through the system.

The speed-up of the operation is easy to regulate with exchanger 40, and thus the amount of flow readily varies as required. The system valves 7, 8, 9, 10, 11, 12, 13 and 14 are automatically externally operated and are fully opened to reduce the abrasive effects of the passing mixture. If cylinders 3, 4, 5 and 6 include four two-inch (5 cm) rods with a 24-inch (61 cm) stroke at a 13-second cycle rate at a pressure of 1200 psi. (84 kg/cm$^2$ and one-half horsepower motor driving a hydraulic pump, a 180 gallons (681 litres) per hour flow rate will be achieved. This is about one-sixth the horsepower required for a one-end-in/one-end-out operation.

Referring to Figure 3 wherein the pressure up device 43 is shown in detail, it is seen to include a hydraulic cylinder 26 controlled by system pressure at the inlet to reactor 45. Cylinder 26 is connected to an accumulator cylinder 58 in which a piston 59 is reciprocably mounted on rod 60 driven by cylinder 26. The limits of movement of rod 60 and piston 59 are controlled by limit switches 27 and 28. When system pressure in reactor 45 falls below a predetermined value, e.g. 1000 psi. (70 kg/cm$^2$), cylinder 26 will respond by moving piston 59 upwardly in cylinder 58, opening one-way valve 29 and filling cylinder 58. Cylinder 26 automatically reverses upon actuation of switch 27, causing piston 59 to travel downwardly in cylinder 58, causing one-way valve 30 to open which results in an increase in system pressure.

As seen in Figure 4, the reactor 45 and heater 46 consist of a heat exchanger 25, a heater section 19 and three identical vertical dual pass heat exchangers 21, 22 and 23. The heat exchanger 25 is a counterflow plate heat exchanger with a constant rate of air flow, determined by a blower through a heater box containing heater 19, whose four coils 60, 61, 62 and 63 transfer heat to the carrier oil-sewage sludge mixture passing through them. Heat is supplied by a burner 26 and start-up is supplied by electric heater rods. The air may be circulated at approximately 1000 degrees F. (538°C), depending upon the rate of flow and the chemical load.

Mixture enters heat exchanger 21 from mechanical exchanger 40 at inlet 20, and then this mix passes upwardly in one pass of heat exchanger 21 to the top and then through outlet 65 to inlet 66 of heat exchanger 22 where it passes down to the bottom in one pass and exits at 67 to inlet 68 of exchanger 23. Mixture at inlet 68 passes up one pass in exchanger 23 to the top where it exits at 70, entering heater section inlet at 71 where it passes in parallel fashion through coil sections 60, 61, 62 and 63. Mixture at maximum temperature exits heater 19 at outlet 73 and enters inlet 79 of exchanger 23 from where it flows downwardly in out-of-contact heat exchange relation from inbound liquid. After preheating inbound liquid in exchanger 23, outbound mixture enters the lower end of exchanger 22 via line 74 and passes in out-of-contact heat exchange relation with inbound fluid therein. Thereafter the outbound liquid enters the top of exchanger 21 via line 75 and passes in out-of-contact heat exchange relation therewith and exits the reactor through outlet pipe 76 connected to return to mechanical exchanger 40.

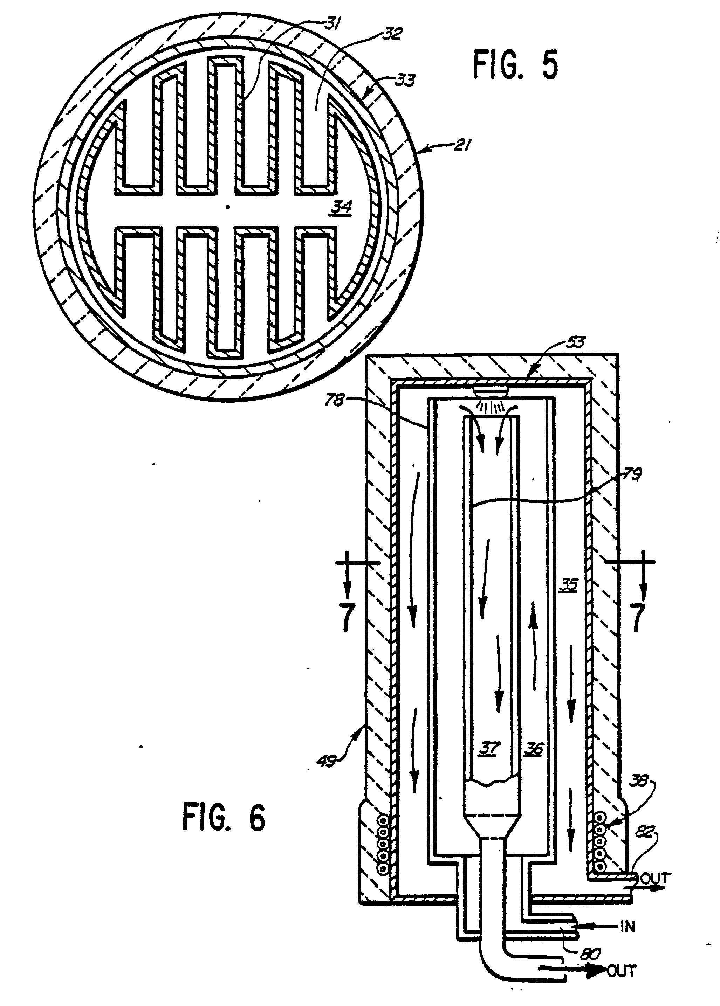

Figure 5 shows a cross section of each of the heat exchangers 21, 22 and 23 illustrated in Figure 4. Each is seen to consist of a housing 33 and a separator 31 which divides the volume into two passes 32 and 34. Pass 32 is the inbound pass going from mechanical exchanger 40 to heater 19, and pass 34 is the outbound flow going from heater 19 to cooler 47. The corrugated shape of separator 31 gives a maximum of heat exchange area.

If system pressure due to an increased volume created by chemical reaction from the reactor 45 is too high, the pressure down device 44 will operate. Pressure down device 44 is identical to pressure up device 43 illustrated in Figure 3. When the pressure down device 44 senses an increase in outlet pressure from reactor 45, the pressure down device will retract, withdrawing fluid from reactor 45, decreasing reactor pressure, and then will extend delivering the withdrawn fluid to the mechanical exchanger without imposing any backloading on the reactor 45 because of the effects of the check valves in the pressure down device 44, corresponding to the valves 29 and 30 in the pressure up device illustrated in Figure 3.

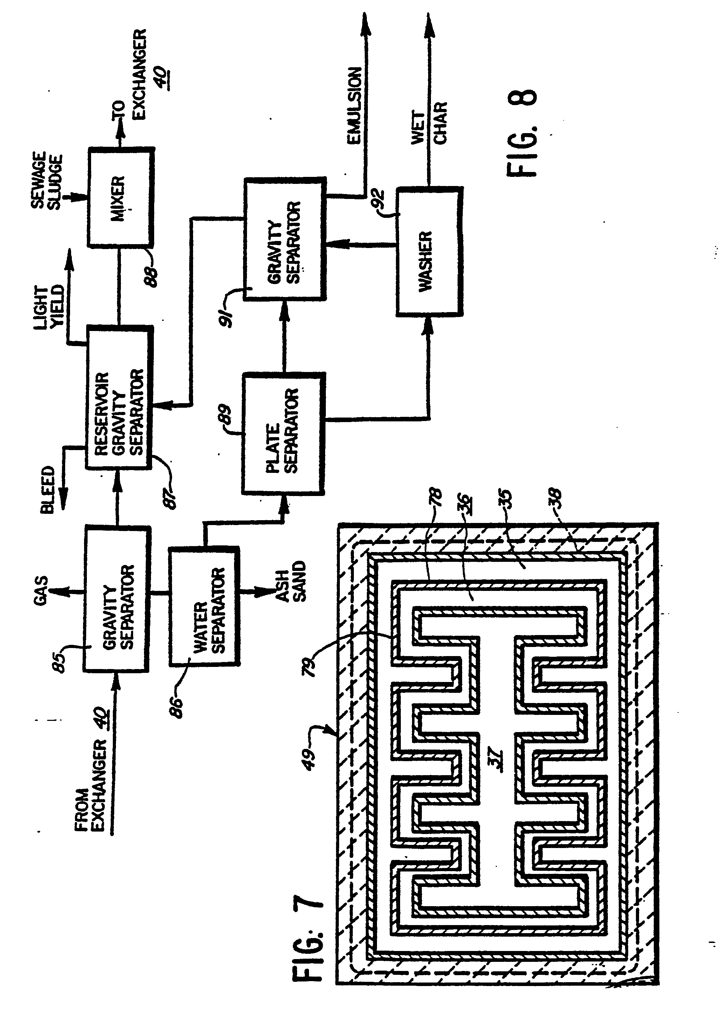

The temperature separator 49 is illustrated in Figures 6 and 7 is seen to consist of three passes 35, 36 and 37 defined by spaced baffles 78 and 79, a heat source 53 and a cold plate area 38. Liquid enters inlet 80, seen in Figure 6 and flows upwardly in pass 36 to the top, picking up heat as it flows and at the top the flow of liquid descends in pass 37 since baffle 79 is shorter than outer baffle 78. The heat absorbed on the way up and at the top is exchanged to the upward flow in pass 36. At the top temperature of typically 400 degrees F. (204°C) is maintained by heater 53 which will vaporize the light ends of the oil yield which descend in pass 35, also giving up heat to inbound liquid flowing upwardly in pass 36 and condensing the remainder in the cold plate area 38.

Light yield flow from outlet 82 goes to a light yield storage, to be used as one of the main by-products of this system.

In Figure 8, I show a schematic diagram of another embodiment of the separator portion of the system illustrated in Figure 1. Gravity separator 85 is a spiral gravity separator and receives reformed liquid from mechanical exchanger 40 and separates reformed liquid from mechanical exchanger 40 and separates free gases at the top as a yield product. The solids at the bottom of separator 85 containing oil, char, sand, ash and emulsion are passed to water separator 86. The carrier mixture from the top of separator 85 contains about 5% char which can be used to take up with any excess water in the input material, and is passed to reservoir gravity separator 87. The gravity separator 87 contains a reservoir section that permits the increase in system volume produced through chemical reformation to be bled off in order to assist in maintaining system pressure. As the inventory builds up in the gravity separator 87 it can be removed and sent to a temperature separator (not shown) to separate the light ends for fuel. The lower carrier in the separator 87 is the heavier oil and will contain some char. This heavier carrier is passed through mixer 88 and permits the heavier oils to be recirculated as carrier and reformed to shorter molecules in the reactor 45, which of course is desirable.

The mixer 88 is a chemical mixer and mixes the carrier in proper proportion to the input raw sewage sludge.

The water separator 86 agitates the solids from gravity separator 85 gently with water, resulting in sand and ash going to the bottom. The char in emulsion entrained in oil will float off the top and the exiting mixture to plate separator 89 contains about 5 to 10% char and 1 to 2% emulsion by volume.

The plate separator 89 is a gravity plate separator with horizontal flow across perforated plates which causes any particle falling through the plate to drop into a non flowing zone that is pitched so these particles dropping undisturbed to the bottom may be removed through a water level. The resulting carrier from plate separator 89 contains only a small percentage of emulsion and is conveyed to gravity separator 91. The concentrate from separator 89 is char saturated with carrier and emulsion and exits the lower end of separator 89 to washer 92.

The gravity separator 91 is a spiral baffle gravity separator that separates the carrier and emulsion which is heavier than the carrier but lighter than water. The clean carrier from washer 92 is also delivered to the input of gravity separator 91 since it will continue to have a small amount of emulsion. The carrier free of char and emulsions flows from the reservoir of gravity separator 91 to the gravity separator 87 as additional carrier oil. The emulsion from gravity separator 91 is removed as yield.

The washer 92 is an intensive agitator which replaces the oil bound around the char with water, at which time it sinks in the water. The wet char is removed from washer 92 and can be conveyed to mixer 88 to be reformed to oil by pyrolysis.

Parts of the apparatus described above which are not described in detail herein may be manufactured and used in accordance with conventional technology known to those skilled in the art of hydraulic and chemical process equipment.

Accordingly, organic waste products, particularly municipal wastes such as undried sewage sludge, but also solid organic resources such as garbage or coal, can be turned into a useful source of energy in the form of oils and burnable gases. The products of the process of this invention are also useful for other industrial purposes.

## Claims

1. The process for pyrolysis of solid organic materials, which comprises: mixing an oil-based carrier with organic material in a mixing zone (39) in a sufficient amount to permit the mixture to be a more readily flowable material than the corresponding waste material free of oil-based carrier, and subsequently pyrolyzing said organic material at elevated temperature in a pyrolyzing zone (45) including passing said flowable material in a substantially continuous stream through the pyrolyzing zone, characterised in that the flowable material contains at least 10% water and is passed under pressure through the pyrolyzing zone to produce liquid oils in the resulting heated stream, and by passing said heated stream downstream of the pyrolyzing zone under pressure through heat exchange means (21 to 23) to recover heat and to transfer the recovered heat to the substantially continuous pressurised stream upstream of the pyrolyzing zone, the heat exchange means comprising a convoluted heat exchange wall (31), the upstream and downstream portions of the continuous stream being in heat exchange relation through the heat exchange wall.

2. The process of Claim 1 in which said readily flowable material is pyrolyzed at a temperature of 700° to 950°F. (371 to 510°C).

3. The process of Claim 1 or 2 in which said readily flowable material is pyrolyzed at a pressure of 700 to 2500 psi (49 to 176 kg/cm$^2$).

4. The process of any preceding claim in which said readily flowable material contains from 60 to 90 weight percent of said oil carrier prior to pyrolysis.

5. The process of Claim 1 in which each portion of the readily flowable material is exposed to pyrolysis at 750° to 900°F. (399 to 482°C) and a pressure of 800 to 1500 psi (56 to 105 kg/cm$^2$) for an average period of time exceeding 5 minutes.

6. The process of any preceding claim in which said solid organic material is sewage sludge or coal.

7. The process of any preceding claim in which said solid organic material contains at least 40 weight percent and preferably at least 30 weight percent of water.

8. A process according to Claim 1 for sewage containing at least 40% water by weight, wherein the pyrolyzing temperature is 800 to 900° F. (427 to 482°C) and the pyrolyzing pressure is 2000 psi (141 kg/cm$^2$) the pyrolysis being carried out for a time sufficient to produce hydrogen from the reaction of the sewage water with the sewage-carrier mixture without the addition of external hydrogen, the method including withdrawing at least a portion of the yield oil from the reformed mixture, and recirculating the remaining portion of the reformed mixture as carrier liquid and adding additional sewage thereto for continuous hydrogenation.

9. A process according to Claim 8, wherein the step of elevating the temperature and pressure of the sewage carrier mixture is controlled to produce superheated steam to improve the production of hydrogen from the reaction of steam with the sewage-carrier mixture.

10. A process according to any preceding claim, wherein the sewage-carrier mixture is propelled by a reciprocating piston device (40) through the reactor (25) where heat is added to the mixture.

11. Apparatus for carrying out the method of Claim 1 comprising a mixer (38) defining the mixing zone, means (40) for supplying an oil-based carrier to the mixer, a reactor (45) defining the pyrolyzing zone for receiving the combined organic material and carrier mixture and pyrolyzing the combined mixture, said reactor including a temperature elevation zone (60) having an inlet and an outlet, said reactor including a regeneration zone (21 to 23) for passing the elevated temperature mixture from the outlet of the temperature elevation zone in out-of-contact heat exchange relation with the incoming mixture at the temperature elevation zone inlet, means (48, 50) for separating the resulting yield oil from the pyrolized mixture, and means for returning at least a portion of the yield oil to the mixer as oil-based carrier, the regenerating means comprising a convoluted heat exchange wall (31) which separates the elevated temperature mixture from the incoming mixture in heat exchange relationship, the exchange wall being enclosed in a housing (33) adapted to withstand the pressure of the flowable material.

12. Apparatus according to Claim 11, including a mechanical exchanger (40) for conveying the carrier mixture from the mixer (39) to the reactor (45), said exchanger including at least one reciprocating piston device (3 to 6).

13. Apparatus according to Claim 12, wherein the mechanical exchanger includes at least one piston and cylinder device (3) for withdrawing reformed carrier mixture from the reactor (45) and one piston and cylinder device (6) for delivering mixture to the reactor.

14. Apparatus according to any one of Claims 11 to 12 including means for providing constant volume flow of the flowable material and comprising a first chamber (3, 4) and second chamber (5, 6) communicating with a conduit therebetween, the conduit being defined by flow passages including the convoluted heat exchange wall (31), and means (1, 2) for alternatingly increasing and decreasing the volume of said first and second chambers in which the volume increasing and decreasing pattern of the first chamber is substantially 180 degrees out-of-phase to the pattern of increasing and decreasing of said volume of the second chamber, and valve means (7, 9, 11, 13) to establish one way flow through said first and second chambers, whereby substantially constant volume flow takes place.

15. The apparatus of any one of Claims 11 to 14 in which the temperature elevation zone (60) is heated by means (61 to 63) for forcing heated air to flow in a flow path which extends generally longitudinally along the flow path of the flowable material in generally counter-current flow relation thereto.

16. The apparatus of Claim 15 including means (25) for passing said flowing, heated air, after it is passed longitudinally along said region of the flow conduit, into heat exchange relation with incoming air.

17. The apparatus of any one of Claims 11 to 15, wherein the reaction flow path of the flowable material from the mixer (29) to the reactor (45) is linear and unbranched.

**Patentansprüche**

1. Verfahren zur Pyrolyse von organischen Feststoffen, bei dem ein Träger auf Ölbasis in einer Mischzone (39) mit organischem Material in ausreichender Menge vermischt wird, um das Gemisch in ein fließfähigeres Material als das entsprechende, vom Träger auf Ölbasis freie Abfallmaterial zu überführen, und anschließend das organische Material in einer Pyrolysezone (45) bei erhöhter Temperatur pyrolysiert wird, wobei das fließfähige Material in einem praktisch kontinuierlichen Strom durch die Pyrolysezone geleitet wird, dadurch gekennzeichnet, daß das fließfähige Material mindestens 10% Wasser enthält und unter Druck durch die Pyrolysezone geleitet wird, um in dem resultierenden erwärmten Strom flüssige Öle zu erzeugen, und der erwärmte Strom stromab der Pyrolysezone unter Druck durch eine Wärmetauschereinrichtung (21—23) geleitet wird, um Wärme rückzugewinnen und die rückgewonnene Wärme stromauf der Pyrolysezone zum praktisch kontinuierlichen, unter Druck stehenden Strom zu übertragen, wobei die Wärmetauschereinrichtung eine gewundene Wärmeaustauschwand (31) aufweist und die stromauf- und stromabseitigen Teile des kontinuierlichen Stroms über die Wärmeaustauschwand in Wärmeaustauschbeziehung stehen.

2. Verfahren nach Anspruch 1, dadurch gekennzeichnet, daß das leicht fließfähige Material bei einer Temperatur von 700 — 950°F (371 — 510°C) pyrolysiert wird.

3. Verfahren nach Anspruch 1 oder 2, dadurch gekennzeichnet, daß das leicht fließfähige Material unter einem Druck von 700 — 2500 psi (49 — 176 kg/cm$^2$) pyrolysiert wird.

4. Verfahren nach einem der vorangehenden Ansprüche, dadurch gekennzeichnet, daß das leicht fließfähige Material vor der Pyrolyse 60 — 90 Gew.-% Öl-Träger enthält.

5. Verfahren nach Anspruch 1, dadurch gekennzeichnet, daß jeder Teil des leicht fließfähigen Materials der Pyrolyse bei 750 — 900°F (399 — 482°C) und einem Druck von 800 — 1500 psi (56 — 105 kg/cm$^2$) während einer durchschnittlichen Zeitspanne von mehr als 5 min unterworfen wird.

6. Verfahren nach einem der vorangehenden Ansprüche, dadurch gekennzeichnet, daß der organische Feststoff Abwasserschlamm oder Kohle ist.

7. Verfahren nach einem der vorangehenden Ansprüche, dadurch gekennzeichnet, daß der organische Feststoff mindestens 40 Gew.-% und vorzugsweise mindestens 30 Gew.-% Wasser enthält.

8. Verfahren nach Anspruch 1 für die Behandlung von Abwasser mit einem Wassergehalt von mindestens 40 Gew.-%, dadurch gekennzeichnet, daß die Pyrolysetemperatur 800 — 900°F (427 — 482°C) und der Pyrolysedruck 2000 psi (141 kg/cm$^2$) betragen, die pyrolyse während einer Zeitspanne durchgeführt wird, die ausreicht, um ohne Zugabe von externem Wasserstoff aufgrund der Reaktion des Abwassers mit dem Abwasser/Träger-Gemisch Wasserstoff zu erzeugen, und daß im Verfahren zumindest ein Teil des Ausbeute-Öls vom reformierten Gemisch abgezogen und der restliche Teil des reformierten Gemisches als Trägerflüssigkeit rückzirkuliert und für kontinuierliche Hydrierung mit zusätzlichem Abwasser versetzt wird.

9. Verfahren nach Anspruch 8, dadurch gekennzeichnet, daß der Schritt der Erhöhung von Temperatur und Druck des Abwasser/Träger-Gemisches für die Erzeugung von überhitztem Dampf gesteuert wird, um die Erzeugung von Wasserstoff aus der Reaktion des Dampfes mit dem Abwasser/Träger-Gemisch zu verbessern.

10. Verfahren nach einem der vorangehenden Ansprüche, dadurch gekennzeichnet, daß das Abwasser/Träger-Gemisch mittels einer Hubkolbenvorrichtung (40) durch den Reaktor (25) getrieben wird, in welchem dem Gemisch Wärme zugeführt wird.

11. Vorrichtung zur Durchführung des Verfahrens nach Anspruch 1, umfassend einen die Mischzone festlegender Mischer (38), eine Einrichtung (40) zum Zuführen eines Trägers auf Ölbasis zum Mischer, einen die Pyrolysezone festlegenden Reaktor (45) zum Aufnehmen des kombinierten Gemisches aus dem organischen Material und dem Träger und zum Pyrolysieren des kombinierten Gemisches, wobei der Reaktor eine Temperaturerhöhungszone (60) mit einem Einlaß und einem Auslaß und ferner eine Regenerationszone (21 — 23) zum Leiten des auf erhöhter Temperatur befindlichen Gemisches vom Auslaß der Temperaturerhöhungszone in berührungsfreier Wärmetauschbeziehung mit dem einströmenden Gemisch am Einlaß der Temperaturerhöhungszone aufweist, eine Einrichtung (48, 50) zum Trennen des resultierenden Ausbeute-Öls (gewonnenen Öls) vom pyrolysierten Gemisch und eine Einrichtung zum Zurückführen mindestens eines Teils des Ausbeute-Öls als Träger auf Ölbasis zum Mischer, wobei die Regenerationseinrichtung eine gewundene Wärmeaustauschwand (31) aufweist, welche das auf erhöhter Temperatur befindliche Gemisch in Wärmeaustauschbeziehung vom einströmenden Gemisch trennt, und wobei die (Wärme-)Austauschwand in einem Gehäuse (33) eingeschlossen ist, welches den Druck des fließfähigen Materials auszuhalten vermag.

12. Vorrichtung nach Anspruch 11, gekennzeichnet durch einen mechanischen Austauscher (40) zum Fördern des Trägergemisches vom Mischer (39) zum Reaktor (45), wobei der Austauscher mindestens eine Hubkolbenvorrichtung (3—6) aufweist.

13. Vorrichtung nach Anspruch 12, dadurch gekennzeichnet, daß der mechanische Austauscher mindestens eine Kolben-Zylindervorrichtung (3) zum Abziehen von reformiertem Trägergemisch aus dem Reaktor (45) und eine Kolben-Zylindervorrichtung (6) zum Liefern des Gemisches zum Reaktor aufweist.

14. Vorrichtung nach einem der Ansprüche 11 bis 12, gekennzeichnet durch eine Einrichtung zur Gewährleistung einer Konstantvolumenströmung des fließfähigen Materials mit einer ersten Kammer (3, 4) und einer zweiten Kammer (5, 6), die mit einer dazwischen befindlichen Leitung kommunizieren, die ihrerseits durch die gewundene Wärmeaustauschwand (31) einschließende Strömungswege festgelegt ist, und eine Einrichtung (1, 2) zum abwechselnden Vergrößern und Verkleinern des Volumens der ersten und zweiten Kammern, wobei das Volumenvergrößerungs- und -verkleinerungsschema der ersten Kammer um praktisch 180° außer Phase zum Schema der Volumenvergrößerung und -verkleinerung der zweiten Kammer ist, sowie eine Ventileinrichtung (7, 9, 11, 13) zum Festlegen einer Einwegströmung durch erste und zweite Kammern, so daß eine Strömung mit im wesentlichen konstantem Volumen stattfindet.

15. Vorrichtung nach einem der Ansprüche 11 bis 14, dadurch gekennzeichnet, daß die Temperaturerhöhungszone (60) durch eine Einrichtung (61 — 63) zum zwangsweisen Hindurchströmenlassen von erwärmter Luft auf einem Strömungsweg, der sich im wesentlichen in Längsrichtung entlang des Strömungswegs des fließfähigen Materials (und) im wesentlichen in Gegenstrombeziehung dazu erstreckt, erwärmbar bzw. beheizbar ist.

16. Vorrichtung nach Anspruch 15, gekennzeichnet durch eine Einrichtung (25) zum Führen der strömenden, erwärmten Luft, nachdem diese in Längsrichtung entlang des genannten Bereichs der Strömungsleitung geleitet worden ist, in Wärmeaustauschbeziehung mit der einströmenden Luft.

17. Vorrichtung nach Anspruch 11 bis 15, dadurch gekennzeichnet, daß der Reaktionsströmungsweg des fließfähigen Materials vom Mischer (29) zum Reaktor (45) geradlinig und unverzweigt verläuft.

**Revendications**

1. Le procédé de pyrolyse de matières organiques solides, qui comprend: le mélange d'un véhicule à base d'huile avec une matière organique dans une zone de mélange (39) en quantité suffisante pour permettre au mélange d'être un matériau plus facilement fluidifiable que le matériau de rebut correspondant sans véhicule à base d'huile, suivi par la pyrolyse dudit matériau organique à température élevée dans une zone de pyrolyse (45) comprenant le passage dudit matériau fluidifiable en un flot en grande partie continu à travers la zone de pyrolyse, caractérisé en ce que le matériau fluidifiable contient au moins 10% d'eau et passe sous pression à travers la zone de pyrolyse pour produire des huiles liquides dans le flot chauffé en résultant, et le passage dudit flot chauffé en aval de la zone de pyrolyse sous pression à travers un moyen d'échange de chaleur (21 à 23) pour retrouver la température et pour transférer la température retrouvée au flot pressurisé en grande partie continu en amont de la zone de pyrolyse, le moyen d'échange de chaleur comprenant une paroi d'échange de chaleur convolutée (31), les parties amont et aval du flot continu se trouvant en relation d'échange de chaleur à travers la paroi d'échange de chaleur.

2. Le procédé de la Revendication 1 dans lequel ledit matériau facilement fluidifiable est pyrolysé à une température comprise entre 371 et 510°C.

3. Le procédé de la Revendication 1 ou 2 dans lequel ledit matériau facilement fluidifiable est pyrolysé à une pression allant de 49 à 176 kg/cm².

4. Le procédé de toute revendication précédente dans lequel 60 à 90 pour-cent du poids dudit matériau facilement fluidifiable se compose dudit véhicule huileux avant pyrolyse.

5. Le procédé de la Revendication 1 dans lequel chaque partie du matériau facilement fluidifiable est soumise à une pyrolyse allant de 399 à 482°C et à une pression comprise entre 56 et 105 kg/cm² pendant une durée moyenne excédant 5 minutes.

6. Le procédé de toute revendication précédente dans lequel ledit matériau organique est de la vase d'eaux d'égout ou du charbon.

7. Le procédé de toute revendication précédente dans lequel au moins 40 ou de préférence au moins 30 pourcent du poids dudit matériau organique solide est de l'eau.

8. Un procédé en conformité avec la Revendication 1 destiné aux égouts dont 40% du poids au moins est de l'eau, dans lequel la température de pyrolyse est comprise entre 427 et 482°C et la pression de pyrolyse est de 141 kg/cm², la pyrolyse se déroulant pendant une période assez longue pour qu'il y ait production d'hydrogène à partir de la réaction entre l'eau d'égout et le mélange véhicule-eaux d'égout sans l'addition d'hydrogène externe, la méthode comprenant le retrait d'au moins une partie de l'huile produite à partir du mélange reformé, et la remise en circulation de la partie restante du mélange reformé comme liquide véhiculeur et en y ajoutant de l'eau d'égout supplémentaire pour qu'il y ait hydrogénation continue.

9. Un procédé en conformité avec la Revendication 8, dans lequel l'étape d'élévation de la température et de la pression du mélange véhicule-eaux d'égout est contrôlée de façon à produire de la vapeur surchauffée pour améliorer la production d'hydrogène par la réaction entre la vapeur et le mélange véhicule-eaux d'égout.

10. Un procédé en conformité avec toute revendication précédente, dans lequel le mélange véhicule-eaux d'égout est propulsé par un dispositif à piston alternatif (40) au travers du réacteur (25) où la chaleur est ajoutée au mélange.

11. Un appareil destiné à mettre en application la méthode de la Revendication 1 comprenant un mélangeur (38) définissant la zone de mélange, un moyen (40) pour fournir au mélangeur un véhicule à base d'huile, un réacteur (45) définissant la zone de pyrolyse pour recevoir le matériau organique combiné et le mélange de véhicule et pour pyrolyser le mélange combiné, ledit réacteur comprenant une zone d'élévation de température (60) comportant une entrée et une sortie, ledit réacteur comprenant une zone de régénération (21 à 33) pour faire passer le mélange à température élevée depuis la sortie de la zone d'élévation de température en relation d'échange de chaleur hors contact avec le mélange arrivant à l'entrée de la zone d'élévation de température, un moyen (48, 50) destiné à séparer l'huile produite en résultant du mélange pyrolysé, et un moyen pour faire revenir au moins une partie de l'huile produite au mélangeur comme véhicule à base d'huile, le moyen de régénération comprenant une paroi d'échange de chaleur convolutée (31) qui sépare le mélange à température élevée du mélange arrivant en relation d'échange de chaleur, la paroi d'échange étant incluse dans un logement (33) conçu pour résister à la pression du matériau fluidifiable.

12. Un appareil en conformité avec la Revendication 11, comprenant un échangeur mécanique (40) destiné à transporter le mélange de véhicule du mélangeur (39) au réacteur (45), ledit échangeur comprenant au moins un dispositif à piston alternatif (3 à 6).

13. Un appareil en conformité avec la Revendication 12, dans lequel l'échangeur mécanique comprend au moins un dispositif à piston et à cylindre (3) destiné à retirer le mélange de véhicule reformé du réacteur (45) et un dispositif à piston et à cylindre (6) destiné à alimenter le réacteur en mélange.

14. Un appareil en conformité avec la Revendication 11 ou la Revendication 12 comprenant un moyen destiné à fournir un écoulement à volume constant du matériau fluidifiable et comprenant une première chambre (3, 4) et une seconde chambre (5, 6) communiquant entre elles par un conduit, le conduit étant défini par des passages de fluide comprenant la paroi d'échange de chaleur convolutée (31), et un moyen (1, 2) destiné à augmenter et à réduire alternativement le volume desdites première et seconde chambres dans lequel le schéma d'augmentation et de réduction du volume de la première chambre est en grande partie décalé de 180 degrés par rapport au schéma d'augmentation et de réduction dudit volume de la seconde chambre, et un moyen de valve (7, 9, 11, 13) pour établir un écoulement à sens unique à travers lesdites première et seconde chambres, par lequel se produit un écoulement en grande partie à volume constant.

15. L'appareil décrit dans l'une des Revendications 11 à 14 dans lequel la zone d'élévation de température (60) est chauffée par un moyen (61 à 63) destiné à obliger l'air chauffé à passer dans un passage d'écoulement qui s'étend en général longitudinalement le long du passage d'écoulement du matériau fluidifiable, généralement en relation d'écoulement à contre-courant avec celui-ci.

16. L'appareil décrit dans la Revendication 15 comprenant un moyen (25) destiné à faire passer ledit écoulement d'air chauffé, après son passage longitudinalement le long de ladite région du conduit d'écoulement, en relation d'échange de chaleur avec l'air arrivant.

17. L'appareil décrit dans l'une des Revendications 11 à 15, dans lequel le passage d'écoulement de réaction du matériau fluidifiable du mélangeur (29) au réacteur (45) est linéaire et sans ramification.

FIG. I

WASTE   CARRIER

MIXER
39

MECHANICAL
EXCHANGER
40

ACCUMULATOR
41

PRESSURE
UP
DEVICE          43

20

REACTOR
45

HEATER

COOLER
47            46

ACCUMULATOR
42

PRESSURE
DOWN
DEVICE          44

76

GRAVITY
SEPARATOR
48

GAS

FUEL
STORAGE
GAS             51

SOLIDS
YIELD

80

TEMPERATURE
SEPARATOR
49

GAS

GRAVITY
SEPARATOR
50

CARRIER
RESERVOIR
52

82

LIGHT
YIELD

HEAVY
YIELD

TO MIXER

EP 0 165 305 B1

# FIG. 2

FIG. 4

FIG. 3

FIG. 5

FIG. 6

FROM
EXCHANGER 40

GAS

85

GRAVITY
SEPARATOR

86

WATER
SEPARATOR

ASH
SAND

BLEED

87

RESERVOIR
GRAVITY
SEPARATOR

LIGHT
YIELD

88

SEWAGE
SLUDGE

MIXER

TO
EXCHANGER 40

89

PLATE
SEPARATOR

91

GRAVITY
SEPARATOR

EMULSION

92

WASHER

WET
CHAR

FIG. 8

FIG. 7

78
36
35
38
79
49
31